# FASCICULE DE BREVET EUROPEEN

(11) **EP 0 326 472 B1**
(45) Date de publication et mention de la délivrance du brevet: **17.03.1993**
(21) Numéro de dépôt: 89400179.1
(22) Date de dépôt: 23.01.1989
(51) Int. Cl.: F16F 13/00

(54) **Perfectionnements apportés aux manchons de support antivibratoires hydrauliques**
Hydraulische Antischwingungslage
Hydraulic antivibration sleeve bearings

(30) Priorité: 28.01.1988 FR 8800978
(43) Date de publication de la demande: 02.08.1989
(73) Titulaire: HUTCHINSON, F-75008 Paris (FR)
(72) Inventeur: Thélamon, Jean, F-28220 Douy (FR); Vidal, Alain, F-63000 Clermont-Ferrand (FR)
(74) Mandataire: Behaghel, Pierre

(56) Documents cités:
- EP-A- 0 232 892
- EP-A- 0 234 966
- EP-A- 0 248 714
- FR-A- 2 600 736
- US-A- 3 642 268
- US-A- 3 698 703
- US-A- 4 717 111
- PATENT ABSTRACTS OF JAPAN, vol. 8, no. 5 (M-267)[1442], 11 janvier 1984, page 124 M 267
- PATENT ABSTRACTS OF JAPAN, vol. 11, no. 336 (M-638)[2783], 4 novembre 1987, page 84 M 638
- PATENT ABSTRACTS OF JAPAN, vol. 10, no. 21 (M-449)[2078], 20 janvier 1986, page 80 M 449

## Description

L'invention est relative aux manchons de support antivibratoires hydrauliques comprenant deux armatures rigides tubulaires s'entourant l'une l'autre et de préférence de révolution au moins en partie, coaxiales et concentriques au moins sous charge, armatures réunies entre elles par un corps en élastomère relié de façon étanche à celles-ci et conformé de façon à former avec ces dernières au moins deux chambres étanches diamétralement opposées selon une direction Y et communiquant entre elles par un canal étroit, l'ensemble desdites chambres et dudit canal étant rempli d'un liquide.

De tels manchons sont destinés à être montés aux fins de support et d'amortissement entre deux pièces rigides solidarisables respectivement avec les deux armatures et susceptibles de subir l'une par rapport à l'autre des oscillations orientées selon la direction diamétrale Y, l'ensemble étant agencé de façon telle que, pour certaines au moins de ces oscillations, le liquide soit refoulé alternativement de l'une des chambres vers l'autre et inversement à travers le canal étroit, ce qui crée dans ce liquide, pour certaines fréquences des oscillations, un phénomène de résonance propre à amortir la transmission de ces oscillations de l'une des armatures à l'autre.

Les manchons à débattement diamétral du genre en question sont par exemple destinés à être interposés entre, d'une part, un châssis de véhicule et, d'autre part, le moteur à combustion interne ou le train avant ou arrière de ce véhicule.

Pour remplir les fonctions de support et d'amortissement mentionnées ci-dessus, on connaît un autre type de dispositifs hydrauliques, à débattement axial et non pas diamétral, présentant une construction de révolution autour d'un axe généralement vertical, la direction selon laquelle se manifestent les oscillations à amortir étant celle de cet axe.

Ces supports comportent encore deux chambres déformables étanches communiquant entre elles par un canal étroit, l'une de ces deux chambres, généralement délimitée extérieurement par une paroi tronconique épaisse, étant dite "chambre de travail" alors que l'autre, essentiellement délimitée par une feuille flexible, est dite "chambre de compensation".

Il a été proposé d'équiper ces autres supports de moyens de "découplage haute fréquence", c'est-à-dire permettant de filtrer les vibrations de relativement faible amplitude (généralement inférieure à 0,5 mm) et de relativement haute fréquence (généralement supérieure à 15 Hz) telles que celles dues au fonctionnement d'un moteur à combustion interne de véhicule.

Ces moyens comprennent un "clapet" mobile ou déformable délimitant une portion de la chambre de travail, cette portion pouvant se situer au niveau de la paroi extérieure de ladite chambre ou au niveau d'une cloison centrale séparant les deux chambres, ainsi que des moyens pour limiter à une faible valeur, notamment de l'ordre de 0,5 mm, l'amplitude des débattements dudit clapet.

On a cherché à appliquer une telle formule de découplage aux manchons à débattement diamétral tels que définis ci-dessus.

C'est ainsi qu'il a été proposé dans le brevet Europe n° 0 172 700 de constituer une portion de la paroi extérieure de l'une des deux chambres d'un tel manchon par une membrane déformable encagée entre deux grilles rigides aux fins de limitation de ses débattements.

Une telle solution présente l'inconvénient qu'en cas de rupture ou fuite de la membrane, le liquide contenu dans le manchon s'échappe à l'extérieur, ce qui rend ce manchon inopérant.

Du fait de la construction particulière des manchons à débattement diamétral, on a rarement adopté jusqu'à ce jour pour ces manchons la formule du clapet central connue pour les supports à débattement axial.

Certes il a été proposé dans le document JP-A-62 118131 de monter un tel clapet sur l'armature tubulaire intérieure, mais un tel montage présente un encombrement radial très grand qui limite considérablement les amplitudes des débattements du manchon.

Il n'avait jamais été proposé jusqu'à ce jour de localiser un tel clapet dans l'un des tronçons déformables, courts et épais, prolongeant diamétralement vers l'extérieur l'armature tubulaire interne et reliant celle-ci à l'armature tubulaire externe.

La demanderesse a réalisé qu'une telle localisation était non seulement possible, mais présentait en outre l'important avantage de ne diminuer en rien l'amplitude des débattements du manchon selon la direction Y.

Les manchons du genre en question selon l'invention sont donc essentiellement caractérisés en ce que l'un au moins des tronçons, de leur cloison centrale, reliant entre elles les deux armatures, est évidé par un puits s'étendant selon la direction Y, indépendant du canal étroit -lequel est localisé au voisinage de l'une des deux extrémités axiales du manchon- et suffisamment large pour faire communiquer librement entre elles les deux chambres, puits barré par un clapet mobile ou déformable du genre ci-dessus.

Dans des modes de réalisation préférés, on a recours en outre à l'une et/ou à l'autre des dispositions suivantes :
- pour un manchon du genre ci-dessus dont l'armature tubulaire externe présente un diamètre extérieur compris entre 5 et 12 cm, la section transversale globale des clapets barrant les puits est comprise entre 0,75 et 3 cm2,
- la portion du corps en élastomère qui délimite l'une au moins des chambres présente en section axiale la forme générale d'un V ouvert radialement vers l'extérieur,
- le puits est évidé dans une portion en élastomère de la cloison centrale,
- le puits selon l'alinéa précédent est garni de deux bagues cylindriques alignées axialement selon la direction Y avec interposition du clapet, avec ou sans jeu,
- le puits est évidé dans une barrette rigide constituant la portion diamétralement extérieure de la cloison centrale,
- chaque barrette selon l'alinéa précédent est constituée par deux demi-barrettes juxtaposées l'une contre l'autre selon la direction Y,
- chaque demi-barrette selon l'alinéa précédent fait partie d'une armature rigide arquée comportant au moins deux arceaux qui s'étendent le long des extrémités axiales de la face intérieure de l'armature externe.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

Les figures 1 et 2, de ces dessins, montrent un premier manchon de support antivibratoire hydraulique établi selon l'invention, respectivement en coupe axiale selon I-I, figure 2 et en coupe transversale selon II-II, figure 1.

Les figures 3 et 4 montrent un second manchon également conforme à l'invention, respectivement en coupe axiale selon III-III, figure 4 et en coupe transversale selon IV-IV, figure 3.

D'une façon connue en soi, le manchon de support comprend dans chaque cas :
- une armature métallique interne tubulaire de révolution 1 dont l'axe X est généralement horizontal,
- une armature métallique externe tubulaire de révolution 2 coaxiale à l'armature 1 au moins pour l'état monté et chargé du manchon et entourant cette armature 1,
- et un corps en élastomère 3 reliant l'une à l'autre les deux armatures 1 et 2 en ménageant entre celles-ci deux poches ou chambres étanches A,B diamétralement opposées selon une direction Y généralement verticale.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter un support antivibratoire, éléments tels qu'un moteur ou bras de suspension de véhicule et que le châssis de ce véhicule.

Les deux chambres A et B communiquent entre elles par un canal étroit E sur lequel on reviendra plus loin.

Ces deux chambres et le canal étroit E sont remplis d'un liquide L.

Le fonctionnement d'un tel manchon de support est le suivant.

Au repos, le manchon se trouve dans son état illustré sur les dessins.

Si, à partir de cette situation, on applique sur l'armature externe 2, par rapport à l'armature interne 1, une sollicitation selon la direction Y dans le sens de la flèche H, la chambre A se rétrécit par écrasement alors qu'au contraire la chambre B se dilate : le liquide L initialement contenu dans la chambre A est alors chassé vers la chambre B à travers le canal étroit E.

Cet effet est inversé dès que la sollicitation en sens inverse de la précédente est exercée sur l'armature 2.

L'alternance de ces sollicitations est généralement renouvelée à une certaine fréquence et, pour une valeur Fₒ de cette fréquence qui est prédéterminée et liée aux dimensions du canal étroit E, et en particulier au rapport entre sa section droite et sa longueur, la masse de liquide circulant dans ce canal est mise en résonance et le support exerce alors sur la transmission des oscillations de l'une des armatures à l'autre un excellent amortissement.

Le perfectionnement apporté par la présente invention aux manchons du genre ci-dessus permet de les "découpler" vis-à-vis de certaines hautes fréquences, c'est-à-dire de filtrer directement certaines vibrations de fréquence relativement élevée et d'amplitude relativement faible sans faire intervenir aucune circulation du liquide L dans le canal étroit E.

Dans chaque cas on fait appel à cet effet à un clapet vibrant monté de façon telle :
- que ses débattements soient commandés par application de pressions sur respectivement deux de ses plages opposées,
- que ces plages soient en contact libre et direct avec respectivement les volumes de liquide contenus dans les deux chambres A et B,
- et que l'amplitude desdits débattements soit limitée à une faible valeur.

Plus précisément, dans chaque cas, ce clapet 4 barre un alésage ou "puits" 5 lui-même évidé dans la portion, de la paroi 6 séparant les deux chambres A et B, qui est comprise entre les deux armatures 1 et 2.

Le puits 5 présente une section transversale suffisante pour remplir les deux conditions suivantes :
- on n'y observe aucun effet d'étranglement ou de résonance du genre de ceux observés dans le canal étroit E,
- la surface transversale de l'ensemble des clapets 4 est suffisante pour que le volume de liquide L déplacé par leurs débattements corresponde à celui déplacé par les déformations, du corps 3, dues aux vibrations à filtrer.

Dans les modes de réalisation habituels, pour lesquels le diamètre extérieur de l'armature externe est de l'ordre de 6 à 12 cm, la surface globale des clapets est comprise entre 0,75 et 3 cm2.

Le puits 5 a de préférence la forme d'un cylindre de révolution dont l'axe est parallèle à la direction Y.

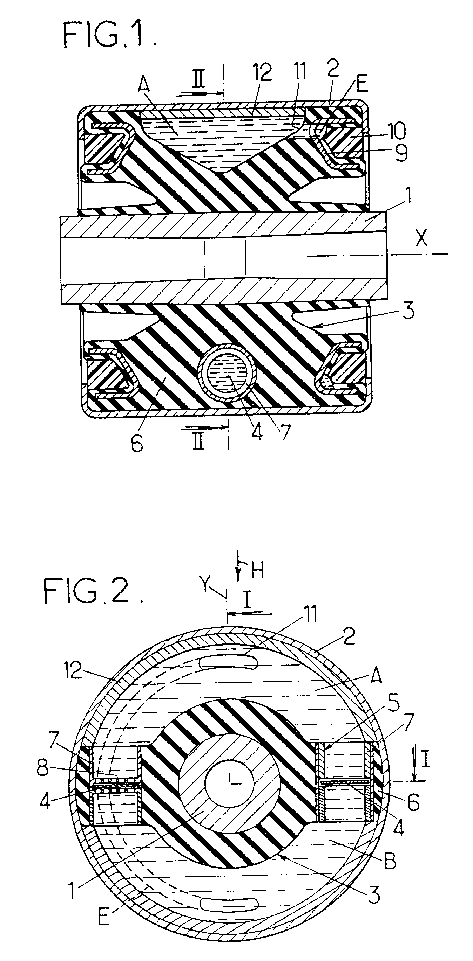

Dans le mode de réalisation illustré sur les figures 1 et 2, le puits 5 est évidé dans une portion en élastomère de la paroi 6.

Ce puits est garni de deux bagues cylindriques 7 disposées dans le prolongement axial l'une de l'autre avec interposition du clapet 4.

Ce clapet se présente sous la forme d'une pastille circulaire rigide constituée notamment en une matière plastique telle qu'une superpolyamide.

La forme et le montage des bagues 7 sont prévus de façon à permettre des débattements de petite amplitude du clapet 4 parallèlement à la direction Y, la valeur maximum de cette amplitude étant de préférence de l'ordre de 0,5 mm.

Dans le mode de réalisation représenté à droite de la figure 2, le diamètre extérieur du clapet 4 est un peu plus grand que le diamètre intérieur des bagues 7 et l'écartement axial de celles-ci est légèrement plus grand que l'épaisseur du clapet, de sorte que ce dernier peut se déplacer axialement entre les tranches en regard des deux bagues.

Dans le mode de réalisation représenté à gauche de la figure 2, chaque bague 7 est barrée par une grille 8 au voisinage de l'une de ses extrémités axiales et le clapet 4 est monté fou dans la cage délimitée par ces deux grilles et par ces deux extrémités après juxtaposition axiale des deux bagues.

Le corps 3 en élastomère est ici tel que la section axiale de chaque poche présente la forme générale d'un V ouvert radialement vers l'extérieur : en d'autres termes, ce corps est conformé à la façon d'un diabolo présentant deux moitiés coniques convergeant vers le centre.

Une telle forme est avantageuse en ce qu'elle rend possibles des déformations élastiques relativement importantes du manchon, se traduisant par des inclinaisons mutuelles relativement élevées des axes de ses deux armatures qui sont coaxiales au repos.

Le canal étroit E, quant à lui, est évidé dans l'une au moins des bases épanouies du diabolo et s'étend sur un arc de cercle d'axe X, arc présentant notamment une étendue angulaire de l'ordre de 180°.

Ledit canal E est délimité par une virole métallique 9 (figure 1) portée par ladite base et ouverte axialement vers l'extérieur du manchon et par une garniture en matière plastique rigide 10 introduite dans cette virole et ne la remplissant pas intégralement.

A ses deux extrémités, le canal E débouche respectivement dans les deux chambres A et B par des lumières 11 appropriées.

On voit encore sur les figures 1 et 2 des armatures rigides 12 en forme de tuiles partiellement cylindriques qui sont montées dans chacune des chambres A et B en longeant jointivement la face intérieure de l'armature externe 2 et dont le rôle est de consolider l'ensemble du manchon afin d'éviter les déformations du corps 3 en élastomère.

Le fonctionnement en "découplage haute fréquence" d'un tel manchon est le suivant.

Lorsqu'une vibration de faible amplitude (savoir en général inférieure à 0,5 mm) et de fréquence relativement élevée (savoir supérieure à 15 Hz et par exemple de l'ordre de 50, 100 ou 150 Hz) est appliquée à l'une des deux armatures 1 et 2, elle entraîne en vibration le clapet 4 et ce phénomène suffit pour assurer un effet de filtrage empêchant le transfert des vibrations de l'armature considérée à l'autre armature.

Si l'amplitude des vibrations considérées dépasse la valeur de seuil imposée par les butées de fin de course du clapet, le liquide est forcé de circuler dans le canal étroit E et l'on retrouve l'autre mode de fonctionnement amortisseur du manchon, plus spécialement réservé aux oscillations de basse fréquence, mode faisant intervenir la résonance du liquide en circulation dans le canal étroit.

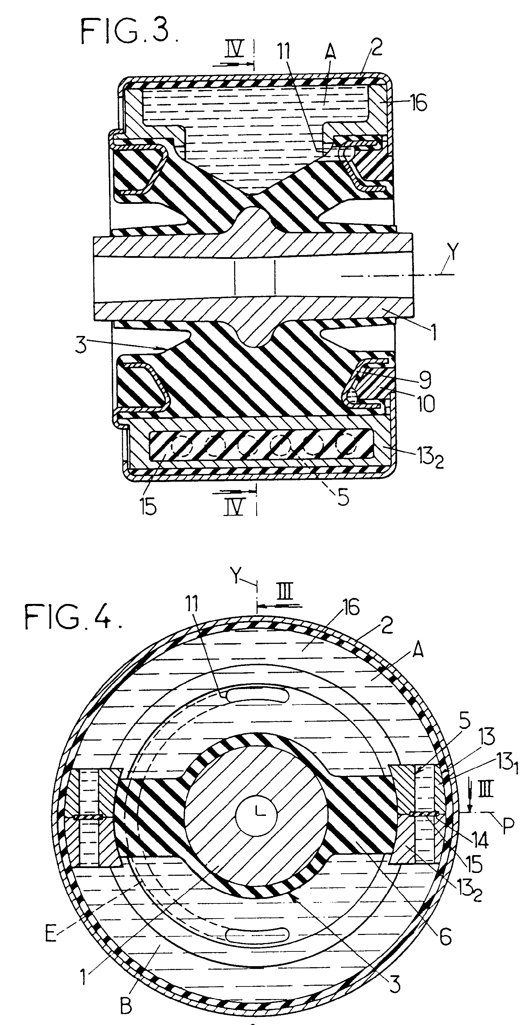

Dans le second mode de réalisation illustré sur les figures 3 et 4, les composants identiques ou comparables à ceux décrits précédemment à propos des figures 1 et 2 ont été affectés des mêmes références.

Le manchon de cette variante diffère du précédent en ce que les puits 5 ne sont pas évidés dans les portions déformées de la paroi de séparation 6, mais dans des portions rigides 13 prolongeant extérieurement ces portions déformées.

Ces portions rigides 13 se présentent ici sous la forme de barrettes composées chacune de deux demi-barrettes 13₁ et 13₂ juxtaposées l'une contre l'autre selon la direction Y.

L'ensemble est agencé de façon telle que, lors de cette juxtaposition, les deux alésages composant chaque puits 5 sont alignés et qu'une gorge annulaire 14 soit formée entre eux, gorge susceptible de recevoir jointivement le pourtour d'une membrane élastique et étanche constituant le clapet 15.

Des moyens sont prévus pour limiter l'amplitude des débattements de cette membrane 15, moyens tels qu'une toile incorporée à celle-ci.

Le plan P selon lequel sont juxtaposées les deux demi-barrettes 13₁ et 13₂ est le plan passant par l'axe X qui est perpendiculaire à la direction Y.

Les deux demi-barrettes situées d'un même côté du plan P sont réunies entre elles par deux arceaux semi-circulaires 16 formant avec ces demi-barrettes une même armature monobloc moulée.

Cette armature joue ici le rôle de maintien qui était joué par les tuiles 12 dans la réalisation précédente.

Cette variante conduit certes à adopter pour l'armature tubulaire externe 2 un diamètre plus grand que pour le mode de réalisation précédent.

Mais dans cette variante, on dispose au niveau des barrettes 13 d'une dimension relativement importante selon la direction de l'axe X et les évidements de cette barrette ne risquent pas d'affaiblir le support, de sorte que les puits 5 peuvent présenter une grande dimension parallèlement audit axe X.

C'est ce qui a été représenté sur la figure 4, pour laquelle le puits 5 est composé de six alésages cylindriques de révolution évidés parallèlement à la direction de l'axe X, la gorge 14 dans laquelle débouchent tous ces alésages étant commune à tous ceux-ci et présentant alors une forme rectangulaire allongée selon la direction de l'axe X.

Le fonctionnement de ce manchon en "découplage haute fréquence" est analogue à celui précédemment décrit à la seule différence prés que les débattements du clapet précédent 4 sont ici remplacés par les déformations de la membrane 15.

En suite de quoi, et quel que soit le mode de réalisation adopté, on dispose de manchons de support antivibratoires dont la constitution et le fonctionnement résultent suffisamment de ce qui précède.

Ces manchons présentent de nombreux avantages par rapport à ceux antérieurement connus, en particulier celui d'assurer un "découplage haute fréquence" efficace sans qu'il existe un risque quelconque de fuite de liquide vers l'extérieur du manchon au niveau même du clapet ou de son siège.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes englobées par les revendications ci-après et notamment celles où, les clapets étant constitués par des pastilles rigides propres à battre entre deux sièges, des moyens, tels que des coussins en caoutchouc montés sur ces pastilles et/ou sur ces sièges, seraient prévus pour éviter les bruits de contact entre pastilles et sièges.

## Revendications

1. Manchon de support antivibratoire hydraulique comprenant deux armatures rigides tubulaires (1,2) s'entourant l'une l'autre et réunies entre elles par un corps en élastomère (3) relié de façon étanche à celles-ci et conformé de façon à former avec elles au moins deux chambres étanches (A,B) diamétralement opposées selon une direction Y, séparées l'une de l'autre par une cloison centrale (6) qui présente au moins deux tronçons et communiquant entre elles par un canal étroit (E), l'ensemble desdites chambres et dudit canal étant rempli d'un liquide, caractérisé en ce que l'un au moins des tronçons, de sa cloison centrale (6), reliant entre elles les deux armatures (1 et 2), est évidé par un puits (5) s'étendant selon la direction Y, indépendant du canal étroit (E) -lequel est localisé au voisinage de l'une des deux extrémités axiales du manchon- et suffisamment large pour faire communiquer librement entre elles les deux chambres (A et B), puits barré par un clapet mobile ou déformable (4 ; 15) de relativement grande surface transversale associé à des moyens pour limiter l'amplitude de ses débattements.

2. Manchon de support selon la revendication 1, dont l'armature tubulaire externe présente un diamètre extérieur compris entre 5 et 12 cm, caractérisé en ce que la section transversale globale des clapets (4, 15) barrant ses puits (5) est comprise entre 0,75 et 3 cm2.

3. Manchon de support selon l'une quelconque des revendications 1 et 2, caractérisé en ce que la portion du corps en élastomère (3) qui délimite l'une au moins des chambres (A,B) présente en section axiale la forme générale d'un V ouvert radialement vers l'extérieur.

4. Manchon de support selon l'une quelconque des précédentes revendications, caractérisé en ce que le puits (5) est évidé dans une portion en élastomère de la cloison centrale (6).

5. Manchon de support selon la revendication 4, caractérisé en ce que le puits (5) est garni de deux bagues cylindriques (7) alignées axialement selon la direction Y avec interposition du clapet (4,15), avec ou sans jeu.

6. Manchon de support selon l'une quelconque des revendications 1 à 3, caractérisé en ce que le puits (5) est évidé dans une barrette rigide (13) constituant la portion diamétralement extérieure de la cloison centrale (6).

7. Manchon de support selon la revendication 6, caractérisé en ce que chaque barrette (13) est constituée par deux demi-barrettes (13₁,13₂) juxtaposées l'une contre l'autre selon la direction Y.

8. Manchon de support selon la revendication 7, caractérisé en ce que chaque demi-barrette fait partie d'une armature rigide arquée comportant au moins deux arceaux (16) qui s'étendent le long des extrémités axiales de la face intérieure de l'armature externe (2).

## Patentansprüche

1. Hydraulisches Antischwingungslager bestehend aus zwei starren rohrförmigen Armaturen (1, 2), von denen die eine die andere umgibt und die miteinander über einen elastomeren Körper (3) in Verbindung stehen, der dicht mit ihnen verbunden und so ausgebildet ist, daß er mit ihnen wenigstens zwei dichte Kammern (A, B) bildet, die sich diametral in der Richtung Y gegenüberliegen, voneinander durch eine mittlere Trennwand (6) getrennt sind, die wenigstens zwei Abschnitte aufweist und die miteinander über einen engen Durchlaß (E) verbunden sind, wobei die Kammern und der Durchlaß mit einer Flüssigkeit gefüllt sind, dadurch gekennzeichnet, daß wenigstens einer der Abschnitte, der mittleren Trennwand (6), die die beiden Armaturen (1 und 2) miteinander verbindet, mit einem Kanal oder Schacht (5) versehen ist, der sich unabhängig von dem engen Durchlaß (E) - der in der Nähe einer der beiden axialen Enden des Lagers angeordnet ist - in der Richtung Y erstreckt und ausreichend breit ist, um die beiden Kammern (A und B) untereinander frei miteinander in Verbindung stehen zu lassen, wobei der Schacht durch ein bewegliches und deformierbares Ventil (4, 15) mit relativ großer Oberfläche in Querrichtung schließbar ist, das mit Einrichtungen zum Begrenzen der Amplitude seiner Schwingungen verbunden ist.

2. Antischwingungslager nach Anspruch 1, dessen äußere rohrförmige Armatur einen zwischen 5 und 12 cm liegenden Außendurchmesser hat, dadurch gekennzeichnet, daß der Gesamtquerschnitt der Ventile (4, 15), die den Schacht schließen, zwischen 0,75 und 3 cm² liegt.

3. Antischwingungslager nach einem der vorhergehenden Ansprüche 1 und 2, dadurch gekennzeichnet, daß der Abschnitt des elastomeren Körpers (3), der wenigstens eine der Kammern (A, B) begrenzt, im axialen Schnitt die allgemeine Form eines V hat, das radial nach außen offen ist.

4. Antischwingungslager nach einem der vorhergehenden Ansprüche, dadurch gekennzeichnet, daß der Schacht (5) in einem aus einem Elastomer bestehenden Abschnitt der mittleren Trennwand (6) ausgenommen ist.

5. Antischwingungslager nach Anspruch 4, dadurch gekennzeichnet, daß der Schacht (5) mit zwei zylindrischen Ringen (7) ausgekleidet ist, die axial in der Richtung Y ausgerichtet sind und zwischen denen das Ventil (4, 15) mit oder ohne Spiel eingesetzt ist.

6. Antischwingungslager nach einem der vorhergehenden Ansprüche 1 bis 3, dadurch gekennzeichnet, daß der Schacht (5) in einem starren Steg (13) ausgenommen ist, der den äußeren diametralen Abschnitt der mittleren Trennwand (6) bildet.

7. Antischwingungslager nach Anspruch 6, dadurch gekennzeichnet, daß der Steg (13) aus zwei Halbteilen (13₁, 13₂) besteht, die zueinander in der Richtung Y ausgerichtet sind.

8. Antischwingungslager nach Anspruch 7, dadurch gekennzeichnet, daß jedes Halbteil den Bestandteil einer starren bogenförmig verlaufenden Armatur bildet, die wenigstens zwei Bögen (16) enthält, die sich längs axialer Enden der inneren Oberfläche der äußeren Armatur (2) erstrecken.

## Claims

1. Hydraulic antivibratory support sleeve comprising two rigid tubular frames (1,2), one surrounding the other and joined together by an elastomer body (3) sealingly connected thereto and shaped so as to form therewith at least two sealed chambers (A,B) diametrically opposite in a direction Y, separated from each other by a central dividing wall (6) which comprises at least two sections and communicating together through a narrow channel (E), the assembly of said chambers and said channel being filled with a liquid, characterized in that one at least of the sections, of its central dividing wall (6), connecting the two frames (1 and 2) together is formed with a well (5) extending in the direction Y, independent of the narrow channel (E) -which channel is located in the proximity of one of the two axial ends of the sleeve- and sufficiently wide to cause the two chambers (A and B) to communicate freely with each other, which well is closed by a mobile or deformable valve (4; 15) of relatively large transverse area associated with means for limiting the amplitude of its deflections.

2. Support sleeve according to claim 1, whose external tubular frame has an external diameter between 5 and 12 cm, characterized in that the overall cross section of the valves (4,15) closing its wells (5) is between 0,75 and 3 cm².

3. Support sleeve according to any one of claims 1 and 2, characterized in that the portion of the elastomer body (3) which defines one at least of the chambers (A, B) has, in axial section, the general shape of a V open radially outwardly.

4. Support sleeve according to any one of the preceding claims, characterized in that the well (5) is formed in an elastomer portion of the central dividing wall (6).

5. Support sleeve according to claim 4, characterized in that the well (5) is provided with two cylindrical rings (7) aligned axially in direction Y with interpositioning of the valve (4,15), with or without clearance.

6. Support sleeve according to any one of the claims 1 to 3, characterized in that the well (5) is formed in a rigid bar (13) forming the diametrically external portion of the central dividing wall (6).

7. Support sleeve according to claim 6, characterized in that each bar (13) is formed by two half bars (13₁,13₂) juxtaposed one against the other in direction Y.

8. Support sleeve according to claim 7, characterized in that each half bar forms part of a rigid arcuate frame comprising at least two hoops (16) which extend along the axial ends of the internal face of the external frame (2).
